# EUROPEAN PATENT APPLICATION

(11) **EP 0 971 153 A1**
(43) Date of publication of application: **12.01.2000**
(21) Application number: 99303473.5
(22) Date of filing: 04.05.1999
(51) Int. Cl.: F16F 13/24

(54) **Movement-damping arrangements**

(30) Priority: 30.06.1998 GB 9814185
(71) Applicant: DRAFTEX INDUSTRIES LIMITED, Edinburgh EH2 3AP, Scotland (GB)
(72) Inventor: Kieffer, Jerome, 44300 Nantes (FR); Drummel, Philippe, 44980 Sainte-Luce-sur-Loire (FR)
(74) Representative: Foster, David Martyn

(57) **Abstract**

A movement-damping arrangement (18) resiliently supports a boss (24) fixed to the rod (12) of a shock absorber (10) in a vehicle suspension system. The boss (24) is resiliently attached to a housing (20) by rubber mounts (28,30). The housing (20) is fixed to the body or chassis (16) of the vehicle. A flexible seal (32) divides the interior space of the housing (20) into upper and lower chambers (36,38) filled with hydraulic fluid. The chambers are interconnected through a short passageway (40) and a long passageway (42), which are respectively closed by spring-biassed valves (44,46). During relative vibration of the boss (24) and the housing (20), the chambers (36,38) are alternately compressed and expanded, so one of the valves (44) is opened during downward movement of the boss (24) and the other (46) is open during upward movement of the boss (24). The fluid passageways (40,42) provide different resonant frequencies and thus provide damping at these two different frequencies.

## Description

The invention relates to a movement-damping arrangement, comprising first and second relatively vibratable rigid members, resilient material interconnecting the two members for flexing in response to their relative vibration, the resilient material defining first and second flexible-walled chambers such that relative movement of the two members in a first direction during their relative vibration compresses the first chamber and expands the second chamber and relative movement of the two members in a second, opposite, direction during their relative vibration expands the first chamber and compresses the second chamber, and a plurality of selectively operative fluid transfer means of predetermined dimension interconnecting the two chambers so that the resonant frequency for hydraulic fluid transfer between the two chambers depends on the selection of the operative fluid transfer means.

Such an arrangement is shown, for example, in GB-A-2 292 595. Several passageways extend between the two chambers and fluid is caused to flow through selected ones of the passageways according to the frequency of vibration or in dependence on a motor-driven valve. The invention aims to provide a simpler method of providing a movement damping arrangement operative over a broader frequency range.

According to the invention, therefore, the movement damping arrangement as first set forth above is characterised in that the fluid transfer means are selectively rendered operative in response to the relative movement of the two members so that the resonant frequency for the said fluid transfer during relative movement of the two members in the first direction is different from the resonant frequency for the said fluid transfer during relative movement of the two members in the second direction.

Movement-damping arrangements embodying the invention, and for incorporation in vehicle suspension systems, will now be described, by way of example only, with reference to the accompanying diagrammatic drawings in which:
Figure 1 is a cross-section through an upper part of a vehicle suspension system, showing one of the movement-damping arrangements;
Figure 2 corresponds to Figure 1 and shows a particular state of operation;
Figure 3 corresponds to Figure 1 but shows a modified form of movement-damping arrangement;
Figure 4 shows the arrangement of Figure 3 in a particular state of operation; and
Figures 5 and 6 correspond to Figure 3 but show the movement-damping arrangement in further states of operation.

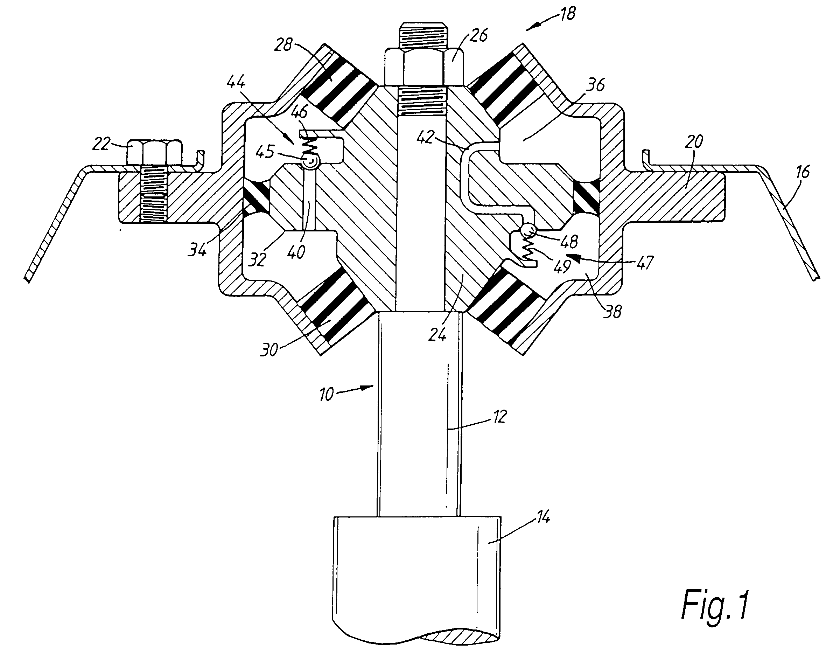

Figure 1 shows part of a telescopic shock absorber 10 having a rod 12 which is movable within a cylindrical body 14 of the shock absorber under control of damping arrangements within the shock absorber. The upper end of the rod 12 is attached to the body or chassis 16 of the vehicle by the movement-damping arrangement shown generally at 18 and to be described in more detail below. The cylindrical body 14 of the shock absorber is attached to the wheel or axle of the vehicle (not shown).

The movement-damping arrangement 18 comprises a rigid housing 20 which is attached to the vehicle body 16 by means of bolts, of which one is shown at 22. A rigid boss 24 is secured to the upper end of the rod 12 by a nut 26. The boss 24 is attached to the housing 20 by means of upper and lower resilient rubber mounts 28,30. The periphery of a flange 32, which is an integral part of the boss 24, is sealingly attached to the inner periphery of the housing 20 by means of an annular seal 34. In this way, the interior of the housing 20 is divided into an annular upper chamber 36 and an annular lower chamber 38. Chambers 36 and 38 are interconnected through the flange 32 by a conduit 40 of relatively short length and a conduit 42 of longer length. The end of the short conduit 40 opening into the upper chamber 36 is controlled by a spring-loaded ball valve 44 having a ball 45 and a spring 46. Similarly, the end of the long conduit 42 opening into the lower chamber 38 is controlled by a spring-loaded ball valve 47 having a ball 48 and a spring 49. In Figure 1, both valves are shown in the closed position.

Chambers 36 and 38, and the conduits 40 and 42, are filled with hydraulic fluid. In operation, the shock absorber 10 damps vertical movement of the body of the vehicle in the usual way. In particular, the shock absorber 10 is well adapted to damp relatively large amplitude vibrations of the vehicle body on the wheel or axle - that is, say, vibrations having a relatively low frequency (1 to 2Hz) at amplitudes of greater than 1mm. However, for low amplitude vibrations (for example 0.1mm to 1mm), occurring at higher frequencies (12 to 15 Hz, say), as a result of wheel hopping or the like, the forces applied to the shock absorber may be lower than the internal frictional forces within the shock absorber, and, in effect, these vibrations are directly transmitted from the wheel through the shock absorber without significant modification. Such vibrations are therefore substantially transmitted directly to the boss 24. The movement-damping arrangement 18 is provided to ensure hydro-elastic damping of such low amplitude relatively high frequency vibrations to reduce their transmission to the vehicle body 16 and thus to improve the comfort of the occupants of the vehicle.

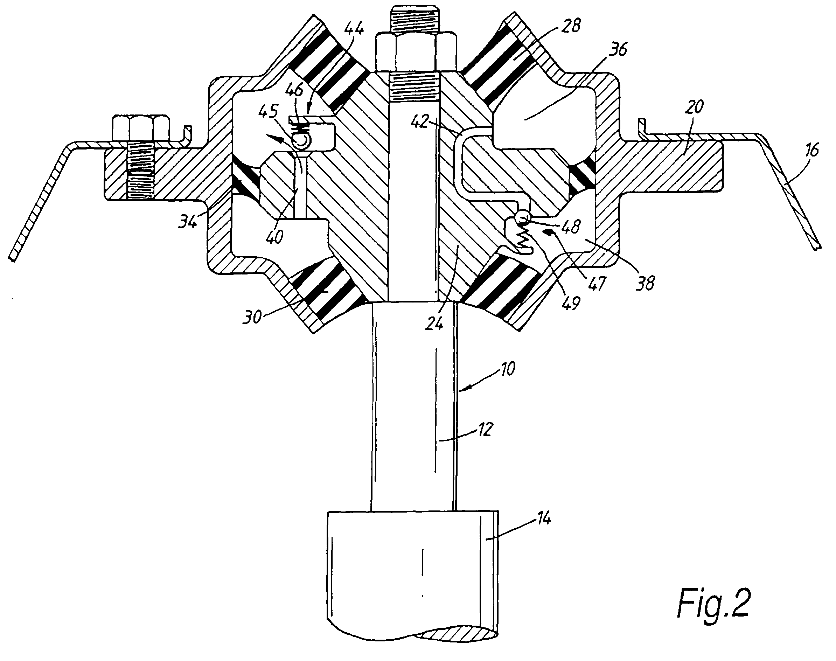

Thus, as the boss 24 moves downwardly in response to such a vibration, the pressure within the lower chamber 38 will increase and the pressure within the upper chamber 36 will decrease. Accordingly, valve 44 will be opened by the pressure of the fluid in the short conduit 40, while valve 47 will be held closed. This situation is shown in Figure 2, and fluid thus flows through conduit 40 from the lower chamber 38 to the upper chamber 36. Similarly, when the boss 24 moves in the opposite (upward) direction, in response to such a vibration, the pressure in the upper chamber 36 increases and the pressure in the lower chamber 38 decreases. Accordingly, valve 47 opens and valve 44 remains closed. Fluid thus transfers from the upper chamber 36 to the lower chamber 38 through the long conduit 42.

In this way, the short and long conduits 40,42 are alternately operative. Because of their different lengths, the two conduits 40,42 have different resonant frequencies, so that the system provides increased damping at two resonant frequencies, instead of at only one resonant frequency which is the case with arrangements having only a single conduit which is operative during each of the two vibration strokes of a complete vibration cycle. In this way, therefore, the movement-damping arrangement 18 ensures that maximum damping is spread over a greater frequency range, defined by the two different resonant frequencies corresponding to the two conduits 40 and 42.

Because each conduit is only operative during half of a complete vibration cycle, the level of the damping produced is lower than if each conduit could resonate in both directions. Nevertheless, sufficient damping can be achieved - with of course the additional advantage that it occurs at two different resonant frequencies and thus over a greater frequency range.

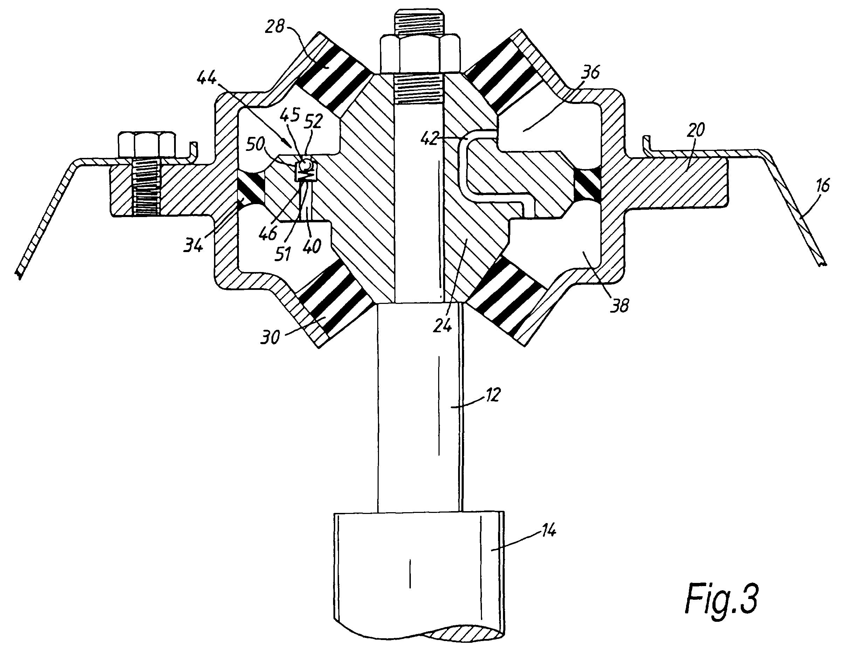

Figures 3 to 6 show a modified arrangement in which items corresponding to those in Figures 1 and 2 are similarly referenced.

In the arrangement of Figures 3 to 6, the valve 44 has a modified construction in which it is mounted in a housing 50 within the flange 32, the housing 50 having an opening 51 in communication with the conduit 40 and an opening 52 in communication with the upper chamber 38. The opening 46 urges the ball 45 into a position in which it closes the opening 52.

The operation will now be described. Two conditions will be considered.

In the first condition, it will be assumed that the vibrations have a relatively high frequency which substantially corresponds to the resonant frequency of the short conduit 40 and is substantially different from the resonant frequency of the conduit 42.

As the boss 24 moves downwardly in response to such a vibration, the pressure within the lower chamber 38 will increase and the pressure within the upper chamber 36 will decrease. Therefore, the ball 45 will remain in closing contact with the aperture 52, being urged into such contact firstly by the bias of the spring 46 and secondly by the pressure difference between the chambers 36 and 38. The situation is thus as shown in Figure 3. No fluid therefore passes through conduit 40.

In addition, however, because the vibratory frequency is significantly different from the resonant frequency of the long conduit 42, substantially no fluid flow takes place through this conduit which is thus effectively closed.

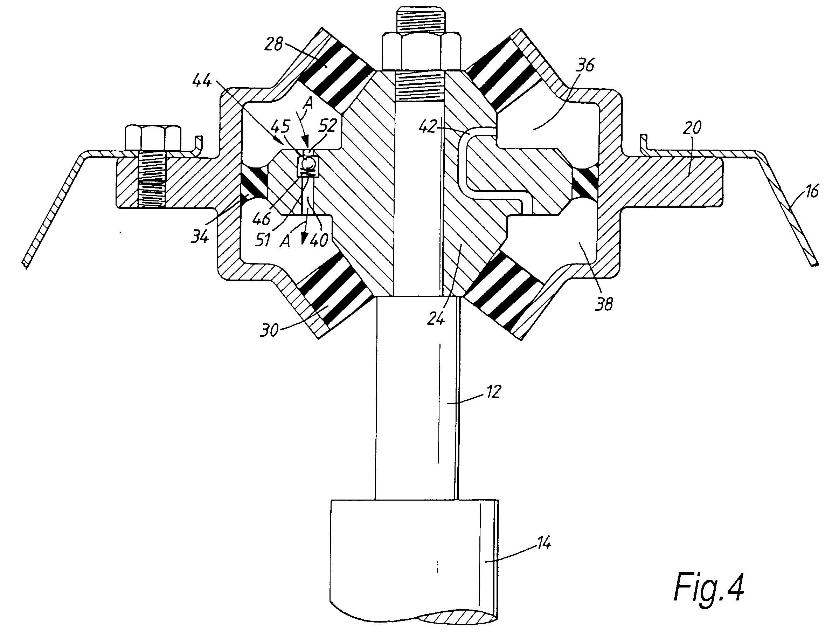

When the boss 24 moves in the opposite (upward) direction (still in the "high frequency" condition), the pressure in the upper chamber 36 increases and the pressure in the lower chamber 38 decreases. Therefore, ball 45 is forced downwardly by this pressure difference, against the bias of the spring 45, into the position shown in Figure 4. Substantial resonant fluid flow through conduit 40 thus takes place as shown by the arrows A. Conduit 42 again remains blocked because the frequency is substantially different from its resonant frequency.

The second condition to be considered is the condition in which the vibration frequency corresponds to the resonant frequency of the long conduit 42, and is thus significantly different from the resonant frequency of the short conduit 40.

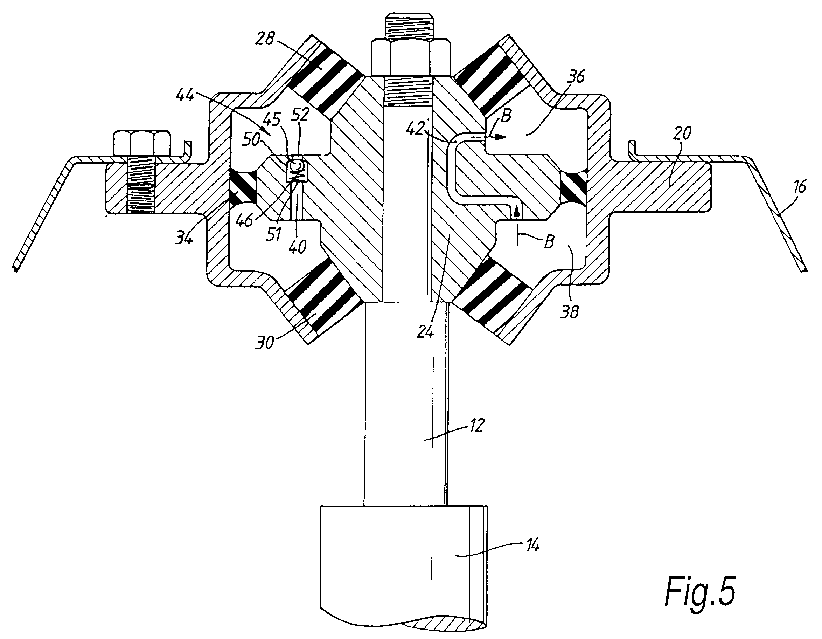

As the boss 24 moves downwardly in response to such a vibration, again the pressure within the lower chamber 38 will increase and the pressure within the upper chamber 36 will decrease. The valve 44 thus remains closed, because the pressure difference between the two chambers assists the bias of the spring 46 in holding the ball 45 against the opening 52. The ball thus has the position shown in Figure 5. However, because the vibration frequency corresponds to the resonant frequency of the long conduit 42, substantial fluid flow takes place through this conduit as shown by arrows B in Figure 5.

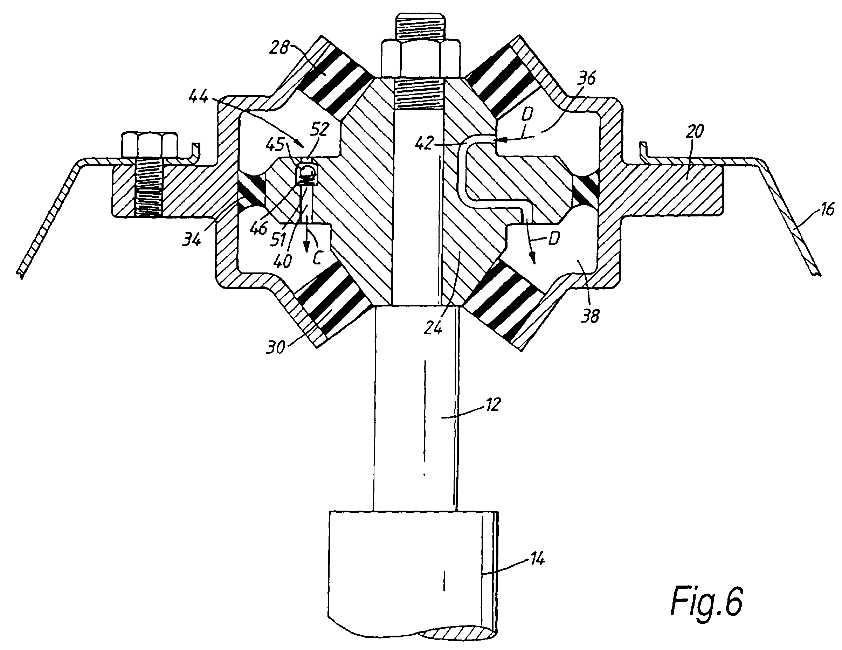

When the boss 24 moves upwardly (still under the "low frequency" condition), the pressure in the upper chamber 36 increases and the pressure in the lower chamber 38 decreases. The pressure difference thus created will tend to act against the bias of the spring 46 and to open the valve 44 as shown in Figure 6. However, because the frequency is substantially different from the resonant frequency of the conduit 40 the valve 44 only opens partially and only a very small fluid flow takes place through the conduit 40 as shown by arrows C in Figure 6. Again, though, substantial fluid flow takes place through the conduit 42, as shown by arrows D in Figure 6.

In summary, therefore, at relatively high vibration frequencies, fluid flow takes place primarily through conduit 40 (and during upward movement of the boss 24). At low frequencies, the fluid flow takes place mainly through conduit 42 (and during both upward and downward movements of the boss 24).

Again, therefore, the arrangement provides increased damping at two resonant frequencies, instead of at only one resonant frequency which is the case with arrangements having only a single conduit.

It will be appreciated that the conduits 40 and 42 need not be positioned to pass through the flange 32. Instead, they (or one of them) can be arranged to pass through another part of the body 24 or through the housing 20. All that is required is that each of them extends between the upper and lower chambers 36,38.

## Claims

1. A movement-damping arrangement, comprising first and second relatively vibratable rigid members (20,24), resilient material (28) interconnecting the two members (20,24) for flexing in response to their relative vibration, the resilient material (28) defining first and second flexible-walled chambers (36,38) such that relative movement of the two members (20,24) in a first direction during their relative vibration compresses the first chamber (36) and expands the second chamber (38) and relative movement of the two members (20,24) in a second, opposite, direction during their relative vibration expands the first chamber (36) and compresses the second chamber (38), and a plurality of selectively operative fluid transfer means (40,42) of predetermined dimension interconnecting the two chambers (36,38) so that the resonant frequency for hydraulic fluid transfer between the two chambers (36,38) depends on the selection of the operative fluid transfer means (40,42), characterised in that the fluid transfer means (40,42) are selectively rendered operative in response to the relative movement of the two members (20,24) so that the resonant frequency for the said fluid transfer during relative movement of the two members (20,24) in the first direction is different from the resonant frequency for the said fluid transfer during relative movement of the two members (20,24) in the second direction.

2. An arrangement according to claim 1, characterised in that there are two fluid transfer means, respectively comprising first and second fluid passageways (40,42) extending between the two chambers (36,38).

3. An arrangement according to claim 2, characterised by control means comprising a respective valve (44,47) for each fluid passageway (40,42), the valve (44) of the first passageway (40) closing that passageway (40) during relative movement of the two members (20,24) in the first direction whereby to block fluid transfer through it (40) and the valve (47) in the second passageway (42) simultaneously opening that passageway (42) during that movement whereby to permit fluid transfer through it (47), and the valve (44) in the first passageway (40) opening that passageway (40) during relative movement of the two members (20,24) in the second direction whereby to permit fluid transfer through it (40) and the valve (47) in the second passageway (42) simultaneously closing that passageway (42) during that movement whereby to block fluid transfer through it (42).

4. An arrangement according to claim 2, characterised by control means comprising a valve (44) for the first passageway (40), the valve (44) closing the first passageway (40) during relative movement of the two members (20,24) in the first direction whereby to block fluid transfer through it (40) and at least partially opening that passageway (40) during relative movement of the two members (20,24) in the second direction whereby to permit fluid transfer through it (40), the second passageway (42) being opened to permit fluid transfer therethrough when the vibration frequency substantially corresponds to the resonant frequency of that passageway (42) and substantially blocking such fluid transfer when the vibration frequency substantially differs from that resonant frequency.

5. An arrangement according to claim 3 or 4, characterised in that one fluid passageway (40) is relatively shod and the other passageway (42) is relatively long, whereby each passageway (40,42) produces a respective one of the resonant frequencies when fluid transfer therethrough is permitted.

6. An arrangement according to any one of claims 3 to 5, characterised in that the or each valve means (44,47) comprises a valve member (45,48) spring-biassed into a position in which it closes the respective passageway (40,42) whereby to block fluid transfer through it, whereby to be opened when the relative movement between the two members (20,24) in the respective direction creates sufficient pressure difference between the two chambers (36,38) as to overcome the spring bias.

7. An arrangement according to claim 6, characterised in that the or each valve member is a spring-loaded ball (45,48).

8. An arrangement according to any preceding claim, characterised in that the first rigid member (20) comprises a housing (20) embracing the second rigid member (24), the resilient material (28) extending from the second member (24) outwardly therefrom to the first member (20) whereby to define a generally annular and enclosed space between the two members (20,24) which provides at least one of the chambers (36,38).

9. An arrangement according to claim 9, characterised by flexible sealing means (34) extending between the two members (20,24) to divide the space into the two chambers (36,38).

10. An arrangement according to claim 8 or 9, characterised in that the fluid transfer means (40,42) pass through one of the rigid members (24).

11. An arrangement according to any one preceding claim, characterised in that the first rigid member (20) is for attachment to the body or chassis of a vehicle and the second rigid member (24) is for attachment to a suspension element of the vehicle.
